# EUROPÄISCHE PATENTSCHRIFT

(11) **EP 3 093 608 B1**
(45) Veröffentlichungstag und Bekanntmachung des Hinweises auf die Patenterteilung: **28.02.2018**
(21) Anmeldenummer: 16168862.7
(22) Anmeldetag: 10.05.2016
(51) Int. Cl.: F42B 35/00, G01L 5/14, F41J 13/00

(54) **SYSTEM ZUM ANALYSIEREN DER EIGENSCHAFTEN VON FRAGMENTIERTEN ABPRALLERN (RICCOCHETS)**
SYSTEM FOR ANALYZING THE PROPERTIES OF RICOCHETED FRAGMENTS
SYSTEME DESTINÉ A ANALYSER LES CARACTERISTIQUES DE FRAGMENTS AYANT RICOCHÉ

(30) Priorität: 11.05.2015 EP 15167158
(43) Veröffentlichungstag der Anmeldung: 16.11.2016
(73) Patentinhaber: RUAG Ammotec AG, 3602 Thun (CH)
(72) Erfinder: Muster, Michael, 3054 Schüpfen (CH); Meyer, Donald, 1772 Grolley (CH); Philippe, Stephani, 6032 Emmen (CH)
(74) Vertreter: Schmid, Nils T.F.

(56) Entgegenhaltungen:
- GB-A- 2 518 237
- RU-C1- 2 482 440
- US-A1- 2015 123 346
- US-B1- 7 163 205

## Beschreibung

Die Erfindung betrifft eine Vorrichtung zum Analysieren der Eigenschaften von Projektilen und deren Fragmente beim Auftreffen auf ein Ziel und ein Verfahren zum Betreiben dieser Vorrichtung.

Um die Geschwindigkeit eines Projektils und dessen Fragmente beim Auftreffen auf ein Ziel zu bestimmen, gibt es verschiedene Methoden. Bekannt und anerkannt sind beispielsweise Lichtschranken, welche die Geschwindigkeit eines Gegenstandes in einem grossen Geschwindigkeitsbereich messen können. EP 0126423 B1 beschreibt ein solches System. Des weiteren beschreibt die RU 2 482 440 C1, die den Ausgangspunkt für die vorliegenden Erfindung bildet, die Verwendung derartiger Lichtschranken in einer Vorrichtung zum Analysieren der Eigenschaften von Projektilen und deren Fragmenten. Negativ hierbei ist der mögliche Wettereinfluss für Außenanwendungen und die allgemeine Störanfälligkeit.

Eine weitere Messmöglichkeit kann durch die Anwendung des Doppler Effekts erfolgen. Der Doppler-Effekt beschreibt die zeitliche Stauchung bzw. Dehnung eines Signals bei Veränderungen des Abstands zwischen Sender und Empfänger während der Dauer des Signals. Ursache ist die Veränderung der Laufzeit. Dieser rein kinematische Effekt tritt bei allen Signalen auf, die sich mit einer bestimmten Geschwindigkeit, meist Lichtgeschwindigkeit oder Schallgeschwindigkeit, ausbreiten. Bei periodischen Signalen erhöht bzw. vermindert sich die beobachtete Frequenz. Hierzu wird nur ein einziger Sensor verwendet, der relativ günstig ist und gute Resultate hervorbringt (siehe EP 0023362 A1). Der Doppler Effekt reagiert auch relativ sensibel auf Witterungseinflüsse. Hierbei sind insbesondere Druck und Temperatur hervorzuheben, zudem ist das System bei "leisen" Projektilen nicht verwendbar.

Es gibt auch die Möglichkeit der magnetischen Detektion, wobei das Projektil beim Durchfliegen zweier hintereinanderliegender Spulen ein Signal abgibt, welches zeitlich differiert. Dadurch kann die Geschwindigkeit abgeleitet werden.

Die Position eines Projektils kann mittels akustischer oder optischer bzw. photoelektrischer Messung bestimmt werden. Derartige Messverfahren in Bezug auf das Schießwesen werden beispielsweise in CH 589835 und CH 609767 beschrieben.

Neben der Geschwindigkeitsmessung ist auch die spezifische Wirkung für die Beschreibung der Projektile eine wichtige Kenngröße, beispielsweise das Fragmentierungsverhalten an sich oder die restliche Energie eines Fragments nach dem Erstaufprall. Die spezifische Wirkung kann beispielsweise mit einer Hochgeschwindigkeitskamera sichtbar gemacht werden. Die Wirkung kann auch mit einer Kartonpappe sichtbar gemacht werden, welche von den Fragmenten durchschlagen wird und beim Durchschlag den Umriss der Fragmente zeigt. Eine weitere Methode ist das Auffangen nach der Fragmentierung mittels einer Abprallplatte in einem Kugelfang. Hierbei werden alle Fragmente aufgefangen und können ausgefiltert, sortiert werden. Hierbei lassen sich Größe, Gewicht und Eindringtiefe ableiten. Diese Methode ist preisgünstig, aber sehr arbeitsintensiv. Eine automatisierte Möglichkeit der Fragmentquantifizierung ist eine Art Impulsmesser. Impulsmesser werden bereits von der Firma Schlagmesser vertrieben. Solche Impulsmesser sind verbreitet im Bereich der Sporttechnik zu finden. Bekannt ist durch eigenen Studien, dass falls die Geschwindigkeit und der Abprallwinkel vergleichbar sind, auch die Fragmente vergleichbar sind.

Schießplätze müssen grosse Sicherheitszonen haben, da Projektile kleinkalibriger Munition (4.6 bis 12.7) sehr weit fliegen können. Falls ein Projektil nicht das Ziel trifft oder die Waffe falsch bedient wird, ergibt sich auch auf weite Distanz ein erhebliches Gefahrenpotential. Ein kleineres Kaliber von 7.62 mm kann sich bei gewissen Winkeln auf eine Distanz von über 4 km letal auswirken.

Falls auf kurze Distanz ein harter Gegenstand getroffen wird, können sich Fragmente (nachfolgend auch Riccochets genannt) bilden die relativ schwer sind, und eine verhältnismäßig große Querschnittsbelastung aufweisen. Diese schweren Fragmente können sich dann völlig unkontrolliert weiter fortbewegen und dies mit beträchtlicher Geschwindigkeit. Solche Riccochets können sich auf Menschen und Maschinen verheerend auswirken. Damit dem Gefahrenpotential Rechnung getragen wird, entsteht eine sehr große Gefahrenzone. Diese basieren aber meist auf mathematischen Berechnungen, welche das spezifische Abprallverhalten nur ungenügend repräsentieren. Zerteilt sich ein Projektil in mehrere Fragmente, entsteht eine kleinere Gefahrenzone, da die Fragmente eine kleinere Querschnittsbelasung besitzen und dadurch weniger weit fliegen. Damit man die Gefahrenzonen minimieren kann und die Berechnungsmodelle mit projektilspezifischen Daten versorgen kann, bedarf es genauer Kenntnis des individuellen Abprallverhaltens. Durch dieses Wissen können Schießplätze mit geringerer Fläche geplant oder verändert werden, ohne dass Sicherheit verloren geht. Zur Bestimmung des individuellen Abprallverhaltens sind vier physikalische Parameter zwingend erforderlich.
1. Geschwindigkeit des Projektils vor dem Aufprall
2. Geschwindigkeit der Fragmente nach dem Aufprall
3. Gewicht der Fragmente nach dem Aufprall
4. Anflugs-Winkel des Projektils und Abflugs-Winkel der Fragmente

Aus diesen vier Parametern können dann mathematische Programme die Sicherheitszonen projektilspezifisch berechnen. Es wird aufgrund diverser Tests davon ausgegangen, dass sich baugleiche Projektile beim Abprallen von einem spezifischen Winkel stets ähnlich verhalten.

Der Erfindung liegt die Aufgabe zugrunde, eine Vorrichtung zum Analysieren der Eigenschaften von Projektilen und deren Fragmente beim Auftreffen auf ein Ziel zu entwickeln, welches fähig ist in einem Prozessschritt alle oben genannten Parameter korrekt zu messen. Die Vorrichtung soll einfach, präzise und automatisierbar sein. Außerdem soll die Vorrichtung auch für den "rauen" Einsatz konzipiert werden. Zusätzlich sollte die Vorrichtung günstig in der Anschaffung sein. Ferner soll ein Verfahren zum Betreiben dieser Vorrichtung entwickelt werden.

Diese Aufgabe wird durch eine Vorrichtung nach den Merkmalen des Anspruchs 1 gelöst.

Dadurch, dass die Vorrichtung eine Abprallplatte umfasst, die in einem einstellbaren Abprallwinkel zum Einfallsweg des Geschoses angeordnet wird und das Projektil in Fragmente zerlegt, die auf einem Ausfallweg von der Abprallplatte auf eine Zeugenplatte geschleudert werden, dass an der Abprallplatte und Zeugenplatte Beschleunigungssensoren oder Kraftsensoren angebracht sind, und mit einer Auswertungseinheit, welche die von den Sensoren erfassten Signale auswertet, ist eine Vorrichtung zum Analysieren der Eigenschaften von Projektilen und deren Fragmente beim Auftreffen auf ein Ziel geschaffen, welches fähig ist in einem Prozessschritt alle oben genannten Parameter korrekt zu messen. Die Vorrichtung ist einfach, präzise und automatisierbar. Durch die Verwendung einfacher Sensoren ist die Vorrichtung auch günstig in der Anschaffung.

In einer Ausführungsform ist die Vorrichtung in einem einzigen Gehäuse angeordnet, welches eine Öffnung für den Einlass des Projektils aufweist. Hierdurch ist die Vorrichtung auch für den "rauen" Einsatz geeignet.

In einer alternativen Ausführungsform ist die Vorrichtung in zwei bevorzugt würfelförmigen Kästen, einem Beschusskanal-Kasten und einem Beschuss-Kasten angeordnet, wobei im Beschusskanal-Kasten die Abprallplatte mit den zugehörenden Sensoren und im Beschuss-Kasten die Zeugenplatte mit den zugehörenden Sensoren angeordnet sind. Hierdurch ist die Vorrichtung auch für den "rauen" Einsatz geeignet. Außerdem sind zwei Kästen leichter zu transportieren und zu lagern als ein Kasten.

Damit das Projektil in den Beschusskanal-Kasten eindringen und die Fragmente des Projektils den Beschusskanal-Kasten auch wieder verlassen können, weist der Beschusskanal-Kasten eine dem ankommenden Projektil zugewandte Eintrittsöffnung und eine dem Beschuss-Kasten zugewandte Austrittsöffnung auf. Die verbleibenden Flächen des Beschusskanal-Kastens sind aus Sicherheitsgründen geschlossen.

Der Beschuss-Kasten weist bevorzugt eine Öffnung auf, die gegen umherfliegende Teile geschützt ist und an die eine Absauge-Vorrichtung angeschlossen ist. So ist sichergestellt, dass keine Fragmente unkontrolliert durch die Öffnung herausfliegen können und andererseits die Luft im Beschuss-Kasten abgesaugt wird.

Vorteilhaft ist am einzigen Gehäuse oder am Beschuss-Kasten ein Trichter zum Auffangen des Projektils bzw. seiner Fragmente angeordnet. Nur dieser Trichter bzw. ein angeschlossener Auffangbehälter muss entleert werden.

In einer erfindungsgemäßen Ausführungsform sind die Abprallplatte und die Zeugenplatte viereckig ausgebildet, auf denen jeweils drei Sensoren angeordnet sind, wobei zwei Sensoren an den beiden Ecken einer Seite und ein Sensor in der Mitte der den beiden Ecken gegenüberliegenden Seite angeordnet ist. So können mit insgesamt 6 Sensoren bzw. 3 Sensoren je Platte alle Signale abgegriffen werden.

Ein erfindungsgemäßes Verfahren zum Betreiben der Vorrichtung ist dadurch gekennzeichnet, dass die Auswertungseinheit mit einer Abtastfrequenz von 1-10 Mio pro Sekunde die Sensorsignale der Abprallplatte und der Zeugenplatte abfragt und aus den Sensorsignalen, nach an sich bekannten Berechnungsmethoden, die Position des Aufschlags und den genauen Zeitpunkt des Aufschlags bestimmt. Durch diese große Abtastfrequenz werden alle Fragmente zeitlich aufgelöst gemessen. Eine kleinere Abtastfrequenz würde nicht alle Fragmente erfassen. Eine größere Abtastfrequenz bringt Störungen mit sich.

Bevorzugt werden aufgrund des Erstaufschlages auf die Abprallplatte und der Zweitaufschläge der Fragmente auf die Zeugenplatte die Geschwindigkeit der Fragmente bestimmt und/oder aus den Positionen des Projektils auf der Abprallplatte und der Fragmente auf der Zeugenplatte die Winkel bestimmt und/oder wird aus dem messbaren Impuls der Fragmente das Gewicht der einzelnen Fragmente bestimmt. Die mathematischen Berechnungsmethoden hierfür sind bekannt.

Bevorzugt wird der Winkel der Abprallplatte mit einem 2-axialen Accelerometer bestimmt, wobei die Winkelmessung über das Gravitationsfeld der Erde erfolgt.

Nachfolgend wird die Erfindung weiter erläutert auch anhand von drei Figuren:

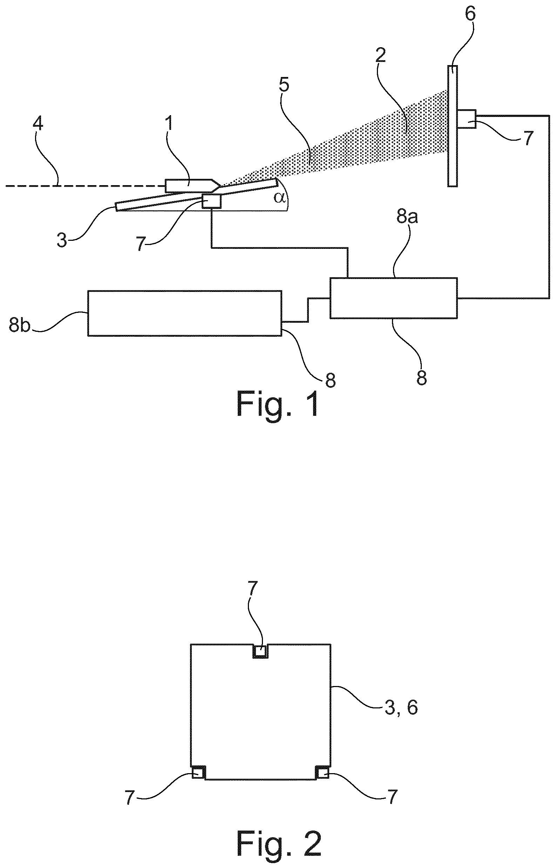

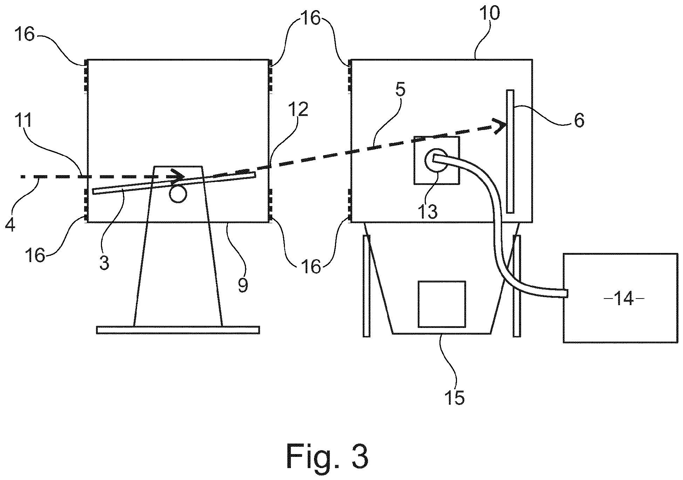

Figur 1 zeigt dass Funktionsprinzip und Figur 3 eine bevorzugte Ausführungsform der erfindungsgemäßen Vorrichtung.

Die erfindungsgemäße Vorrichtung und das zugehörige Verfahren zum Betreiben der Vorrichtung lösen die aus dem Stand der Technik bekannten Probleme, in dem mechanisch robuste Sensoren eingesetzt werden und anhand der gemessenen Sensordaten Rückschlüsse auf die Dynamik des Projektils und der Fragmente gezogen werden. Hierbei werden vorzugsweise Beschleunigungssensoren 7, auch Accelerometer genannt, oder Kraftsensoren eingesetzt, welche auf dem Prinzip des Dehnmessstreifens basieren.

Figur 1 zeigt das Funktionsprinzip.

Mit dem Erstaufprall des Projektils 1 auf eine Abprallplatte 3 können die Zeit und die Position bestimmt werden. Die Position wird mit der Triangulation der zeitlichen Differenzen der Ausschläge bestimmt, wobei die Schallgeschwindigkeit im spezifischen Material der Abprallplatte 3, idealerweise Stahl, bekannt ist. Dadurch kann nicht nur die Position des Projektils 1 bestimmt werden, sondern auch der genaue Zeitpunkt, wann der Aufschlag stattgefunden hat. Die Abprallplatte 3 ist vorzugsweise mit einem Kippmodul ausgestattet, welches ein Einstellen von unterschiedlichen Winkeln α ermöglicht. Damit können verschiedene Szenarien auf verschiedenen Distanzen simuliert werden. Wichtig für die Auswertung ist eine Auswertungseinheit 8, welche aus einer Datenaquisition 8a und einem Computer mit Anzeigeeinheit 8b besteht, welche eine genügend hohe Abtastfrequenz ermöglicht. Vorzugsweise bewegt sich diese Abtastfrequenz um 1-10 Mio Abtastungen pro Sekunde. Damit kann die Position auf den Millimeter genau aufgelöst werden. Die zweite Funktion der Abprallplatte 3 ist die Fragmentierung der Projektile 1 in Fragmente 2. Durch das Auftreffen auf der schrägen Abprallplatte 3 wird absichtlich ein genau definierter Abpraller produziert. Die aus dem Abpraller resultierenden Fragmente 2 werden auf eine weitere Platte geschleudert, die sogenannte Zeugenplatte 6. Grundsätzlich wird bei der Zeugenplatte 6 das gleiche System angewandt wie bei der Abprallplatte 3, insbesondere in Bezug auf die Sensortechnik. Durch den Aufprall vieler Fragmente 2 entsteht bei sehr hoher Abtastfrequenz ein spezifisches Signal, aus dem sich idealerweise die einzelnen Fragmente 2 in einzelnen messbaren Impulsen wiederfinden. Neben dem Impuls werden auch die Positionen der Fragmente 2 sowie der Zeitpunkt des Impakts aufgenommen.

Schließlich kann aufgrund des Erstaufschlages auf die Abprallplatte 3 (Position und Zeitpunkt) und der Zweitaufschläge auf die Zeugenplatte 6 (Position und Zeitpunkt) die Geschwindigkeit der größeren Fragmente 2, idealerweise aber aller Fragmente 2, bestimmt werden. Aus den Positionen können des Weiteren die Winkel (α) bestimmt werden. Idealerweise geben die Fragmente 2 einen messbaren Impuls beim Aufprall. Mit diesem Impuls kann auch das Gewicht der einzelnen Fragmente 2 bestimmt werden.

Vorteilhaft bei dieser Lösung ist, dass keine empfindlichen optischen Geräte (wie Hochgeschwindigkeitskameras oder Lichtschranken) zum Einsatz kommen. Der gesamte kurzzeitphysikalische Ablauf wird in mindestens 6 numerischen Vektoren gespeichert. Diese Vektoren erlauben eine digitale Signalanalyse, wie sie heutzutage oft zum Einsatz kommt.

Figur 2 zeigt eine bevorzugte Ausführungsform bei der die Abprallplatte 3 und die Zeugenplatte 6 viereckig ausgebildet sind und auf denen jeweils drei Sensoren 7 angeordnet sind, wobei zwei Sensoren 7 an den beiden Ecken einer Seite und ein Sensor 7 in der Mitte der den beiden Ecken gegenüberliegenden Seite angeordnet ist.

Figur 3 zeigt eine bevorzugte Ausführungsform der erfindungsgemäßen Vorrichtung. Vorzugsweise werden alle Teile in einem Beschuss-Kasten 10 und einem Beschusskanal-Kasten 9 untergebracht. Der Beschusskanal-Kasten 9 besteht aus einem Art Würfel der vorne eine Eintrittsöffnung 11 und hinten eine Austrittsöffnung 12 hat. In diesem Beschusskanal-Kasten 9 wird die Abprallplatte 3 eingebaut. Die Abprallplatte 3 kann in allen gewünschten Abprallwinkeln (a) eingestellt werden. In einer ganz besonders optimalen Lösung wird die Überprüfung des Winkels mit einem 2-axialen Accelerometer vollautomatisiert durchgeführt (Winkelmessung über Gravitationsfeld). Vorzugsweise hat der Beschusskanal-Kasten 9 vorne wie auch hinten Blenden 16, die einen quadratischen Ausschnitt haben. Dies dienen dem Schutz vor herumfliegenden Fragmenten 2. Das heranfliegende Projektil 1 befindet sich auf einem Einfallsweg 4 und prallt auf die Abprallplatte 3, zerfällt dort in Fragmente 2, die auf einem Ausfallweg 5 den Beschusskanal-Kasten 9 verlassen.

Abgetrennt vom Beschusskanal-Kasten 9 befindet sich ein Beschuss-Kasten 10. Auch dieser ist bevorzugt würfelförmig ausgestaltet. Jedoch ist die hintere Seite mit einer Tür (nicht gezeigt) abgeschlossen. An dieser Tür wird die Zeugenplatte 6 angebracht. Auch beim Beschuss-Kasten 10 dient die seitliche Abdeckung, hergestellt aus dickem Stahlblech, bevorzugt 20 mm, dem Schutz vor umherfliegende Fragmenten. Der ganze Beschusskasten 10 wird bevorzugt auf einen großen Trichter 15 gesetzt, in dem sich die Fragmente 2 nach ihrem Aufprall auf die Zeugenplatte 6 sammeln.

In einer besonders geeigneten Lösung kann diese Vorrichtung auch für Penetrationsversuche von kleinkalibrigen Projektilen verwendet werden. Für diese Zwecke werden die Zeugenplatte 6 und Abprallplatte 3 abgehängt.

Bei den Messungen wie auch bei den Penetrationsversuchen entstehen, kurzzeitphysikalisch bedingt, potentiell giftige Stäube. Hierbei sind insbesondere Feinstäube und Bleistäube hervorzuheben. Damit dieser Gefahr Rechnung getragen wird, ist am Beschuss-Kasten 10 eine Öffnung 13 vorgesehen. Diese Öffnung 13 ist bevorzugt gegen umherfliegende Teile geschützt. Bei dieser Öffnung 13 ist eine Absauge-Vorrichtung 14 angeschlossen. In einer besonders geeigneten Form ein Nassabscheider oder ein HEPA Filter.

## Patentansprüche

1. Vorrichtung zum Analysieren der Eigenschaften von Projektilen (1) und deren Fragmenten (2) beim Auftreffen auf ein Ziel, **dadurch gekennzeichnet, dass** die Vorrichtung eine Zeugenplatte (6) und eine Abprallplatte (3) umfasst, die in einem einstellbaren Abprallwinkel (α) zum Einfallsweg (4) eines Projektils (1) angeordnet werden kann und dazu geeignet ist, das Projektil (1) in Fragmente zu zerlegen, die auf einem Ausfallweg (5) von der Abprallplatte (3) auf die Zeugenplatte (6) geschleudert werden, dass an der Abprallplatte (3) und Zeugenplatte (6) Beschleunigungssensoren (7) oder Kraftsensoren angebracht sind, und dass die Vorrichtung weiterhin eine Auswerteeinheit (8) umfasst, welche für die Auswertung der von den Sensoren (7) erfassten Signale vorbereitet ist.

2. Vorrichtung nach Anspruch 1, **dadurch gekennzeichnet, dass** die Vorrichtung in einem einzigen Gehäuse angeordnet ist, welches eine Öffnung für den Einlass des Projektils (1) aufweist.

3. Vorrichtung nach Anspruch 1, **dadurch gekennzeichnet, dass** die Vorrichtung in zwei bevorzugt würfelförmigen Kästen, einem Beschusskanal-Kasten (9) und einem Beschuss-Kasten (10) angeordnet ist, wobei im Beschusskanal-Kasten (9) die Abprallplatte (3) mit den zugehörenden Sensoren (7) und im Beschuss-Kasten (10) die Zeugenplatte (6) mit den zugehörenden Sensoren (7) angeordnet sind.

4. Vorrichtung nach Anspruch 3, **dadurch gekennzeichnet, dass** der Beschusskanal-Kasten (9) eine dem ankommenden Projektil (1) zugewandte Eintrittsöffnung (11) und eine dem Beschuss-Kasten (10) zugewandte Austrittsöffnung (12) aufweist.

5. Vorrichtung nach Anspruch 3 oder 4, **dadurch gekennzeichnet, dass** der Beschuss-Kasten (10) eine Öffnung (13) aufweist, die bevorzugt gegen umherfliegende Teile geschützt ist und an die eine Absauge-Vorrichtung (14) angeschlossen ist.

6. Vorrichtung nach einem der Ansprüche 1 bis 5, **dadurch gekennzeichnet, dass** am einzigen Gehäuse oder am Beschuss-Kasten (10) ein Trichter (15) zum Auffangen des Projektils (1) bzw. seiner Fragmente (2) angeordnet ist.

7. Vorrichtung nach einem der Ansprüche 1 bis 6, **dadurch gekennzeichnet, dass** die Abprallplatte (3) und die Zeugenplatte (6) viereckig ausgebildet sind und auf denen jeweils drei Sensoren (7) angeordnet sind, wobei zwei Sensoren (7) an den beiden Ecken einer Seite und ein Sensor (7) in der Mitte der den beiden Ecken gegenüberliegenden Seite angeordnet ist.

8. Verfahren zum Betreiben der Vorrichtung nach einem der Ansprüche 1 bis 7, **dadurch gekennzeichnet, dass** die Auswertungseinheit (8) mit einer Abtastfrequenz von 1-10 Mio pro Sekunde die Sensorsignale der Abprallplatte (3) und der Zeugenplatte (6) abfragt und aus den Sensorsignalen, nach an sich bekannten Berechnungsmethoden, die Position des Aufschlags und den genauen Zeitpunkt des Aufschlags bestimmt.

9. Verfahren nach Anspruch 8, **dadurch gekennzeichnet**,
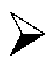 dass aufgrund des Erstaufschlages auf die Abprallplatte (3) und der Zweitaufschläge der Fragmente (2) auf die Zeugenplatte (6) die Geschwindigkeit der Fragmente (2) bestimmt werden und/oder
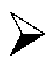 dass aus den Positionen des Projektils (1) auf der Abprallplatte (3) und der Fragmente (2) auf der Zeugenplatte (6) die Winkel bestimmt werden und/oder
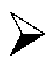 dass aus dem messbaren Impuls der Fragmente (2) das Gewicht der einzelnen Fragmente (2) bestimmt wird.

10. Verfahren nach Anspruch 8 oder 9, **dadurch gekennzeichnet, dass** der Winkel (α) der Abprallplatte (3) mit einem 2-axialen Accelerometer bestimmt wird, wobei die Winkelmessung über das Gravitationsfeld der Erde erfolgt.

## Claims

1. A device for analyzing the properties of projectiles (1) and their fragments (2) upon striking a target, **characterized in that** the device has a witness plate (6) and a ricochet plate (3), which can be arranged at an adjustable ricochet angle (α) to the incidence path (4) of a projectile (1), and is suitable for breaking the projectile (1) down into fragments, which are accelerated on an exit path (5) from the ricochet plate (3) onto the witness plate (6), that acceleration sensors (7) or force sensors are secured to the ricochet plate (3) and witness plate (6), and that the device further comprises an evaluation unit (8), which is prepared for evaluating the signals acquired by the sensors (7).

2. The device according to claim 1, **characterized in that** the device is arranged in a single housing, which has an opening for inserting the projectile (1).

3. The device according to claim 1, **characterized in that** the device is arranged in two, preferably cube-shaped boxes, a firing channel box (9) and a firing box (10), wherein the ricochet plate (3) with the accompanying sensors (7) is arranged in the firing channel box (9), and the witness plate (6) with the accompanying sensors (7) is arranged in the firing box (10).

4. The device according to claim 3, **characterized in that** the firing channel box (9) has an entry opening (11) facing the incoming projectile (1) and an exit opening (12) facing the firing box (10).

5. The device according to claim 3 or 4, **characterized in that** the firing box (10) has an opening (13) that is preferably protected against flying fragments, and is connected with a suction device (14).

6. The device according to one of claims 1 to 5, **characterized in that** a funnel (15) for catching the projectile (1) or its fragments (2) is arranged on the single housing or on the firing box (10).

7. The device according to one of claims 1 to 6, **characterized in that** the ricochet plate (3) and witness plate (6) are square in design, and have a respective three sensors (7) arranged on them, wherein two sensors (7) are arranged on the two corners of one side, and one sensor (7) is arranged in the middle of the side lying opposite the two corners.

8. A method for operating the device according to one of claims 1 to 7, **characterized in that** the evaluation unit (8) queries the sensor signals of the ricochet plate (3) and witness plate (6) at a scanning frequency of 1 - 10 million per second, and determines the position of the impact and precise time of impact from the sensor signals based on known calculation methods.

9. The method according to claim 8, **characterized in that**
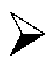 The velocity of fragments (2) is determined based on the first impact on the ricochet plate (3) and second impacts of the fragments (2) on the witness plate (6) and/or
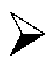 The angles are determined from the positions of the projectile (1) on the ricochet plate (3) and fragments (2) on the witness plate (6), and/or
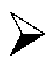 The weight of the individual fragments (2) is determined from the measurable impulse of the fragments (2).

10. The method according to claim 8 or 9, **characterized in that** the angle (a) of the ricochet plate (3) is determined with a 2-axial accelerometer, wherein the angle is measured via the gravitation field of the earth.

## Revendications

1. Dispositif destiné à analyser les propriétés de projectiles (1) et les fragments (2) de ces derniers lors de l'impact sur une cible, **caractérisé en ce que** le dispositif comprend une plaque témoin (6) et une plaque de ricochet (3) qui peut être disposée dans un angle de ricochet réglable (a) vers la trajectoire d'incidence (4) d'un projectile (1) et est appropriée à cet effet pour fragmenter le projectiles (1) en fragments, qui sont projetés sur une trajectoire de chute (5) par la plaque de ricochet (3) sur la plaque témoin (6), **en ce que** des capteurs d'accélération (7) ou capteurs de force (8) sont disposés sur la plaque de ricochet (3) et la plaque témoin (6) et **en ce que** le dispositif comprend en plus une unité d'exploitation, laquelle est préparée pour l'exploitation des signaux saisis par les capteurs (7).

2. Dispositif selon la revendication 1, **caractérisé en ce que** le dispositif est disposé dans un boîtier unique, lequel comporte une ouverture pour l'entrée du projectile (1).

3. Dispositif selon la revendication 1, **caractérisé en ce que** le dispositif est disposé dans deux caissons de préférence en forme de dé, un caisson de canal de tir (9) et un caisson de tir (10), la plaque de ricochet (3) avec les capteurs correspondants (7) étant disposée dans le caisson de canal de tir (9) et la plaque témoin (6) avec les capteurs correspondants (7) dans le caisson de tir (10).

4. Dispositif selon la revendication 3, **caractérisé en ce que** le caisson de canal de tir (9) comporte une ouverture d'entrée (11) tournée vers le projectile arrivant (1) et une ouverture de sortie (12) tournée vers le caisson de tir (10).

5. Dispositif selon la revendication 3 ou 4, **caractérisé en ce que** le caisson de tir (10) comporte une ouverture (13) qui est protégée de préférence contre les particules volant autour et à laquelle est raccordée un dispositif d'aspiration (14).

6. Dispositif selon l'une quelconque des revendications 1 à 5, **caractérisé en ce qu'**une trémie (15) destinée à récupérer le projectile (1) ou ses fragments (2) est disposée sur un boîtier unique ou sur le caisson de tir (10).

7. Dispositif selon l'une quelconque des revendications 1 à 6, **caractérisé en ce que** la plaque de ricochet (3) et la plaque témoin (6) sont constituées rectangulaires et sur lesquelles sont respectivement disposées trois capteurs (7), deux capteurs (7) étant disposés aux deux angles d'un côté et un capteur (7) au centre du côté opposé aux deux angles.

8. Procédé destiné à faire fonctionner le dispositif selon l'une quelconque des revendications 1 à 7, **caractérisé en ce que** l'unité d'exploitation (8) avec une fréquence de balayage de 1 - 10 millions par seconde interroge les signaux de détection de la plaque de ricochet (3) et de la plaque témoin (6) et détermine à partir des signaux de détection, la position de l'impact et le moment précis de l'impact selon les méthodes de calcul connues.

9. Procédé selon la revendication 8, **caractérisé en ce que**
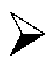 la vitesse des fragments (2) est déterminée sur la base du premier impact sur la plaque de ricochet (3) et sur la base des deuxièmes impacts des fragments (2) sur la plaque témoin (6), et/ou
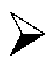 l'angle est déterminé à partir des positions du projectile (1) sur la plaque de ricochet (3) et des fragments (2) sur la plaque témoin (6), et/ou
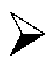 le poids des fragments (2) individuels est déterminé à partir de l'impulsion mesurable des fragments (2).

10. Procédé selon la revendication 8 ou 9, **caractérisé en ce que** l'angle (a) de la plaque de ricochet (3) est déterminé avec un accéléromètre à 2 axes, la mesure angulaire ayant lieu par le biais du champ de gravitation de la terre.
